# EUROPÄISCHE PATENTANMELDUNG

(11) **EP 1 600 697 A1**
(43) Veröffentlichungstag der Anmeldung: **30.11.2005**
(21) Anmeldenummer: 05008884.8
(22) Anmeldetag: 22.04.2005
(51) Int. Cl.: F24D 19/10, G05D 23/19

(54) **Verfahren zum Regeln einer Heizungsanlage**

(30) Priorität: 27.04.2004 DE 102004020607
(71) Anmelder: BBT Thermotechnik GmbH, 35576 Wetzlar (DE)
(72) Erfinder: Klein, Rudolf, 35457 Lollar (DE); Ramlow, Steffen, 35096 Oberweimar (DE)

(57) **Zusammenfassung**

Die Erfindung betrifft ein Verfahren zum Regeln einer Heizungsanlage mit mindestens einem Heizkessel, einem Heizkreislauf zu mindestens einem angeschlossenen Wärmeverbraucher sowie einem Regelgerät, welches entsprechend einer gemessenen Außentemperatur und in Abhängigkeit von einzugebenden Sollwerten eine Kennlinie für die Vorlauftemperatur im Heizkreislauf ermittelt.

Der Erfindung liegt die Aufgabe zugrunde, ein flexibel auf verschiedene Gebäudearten anzupassendes Regelgerät für eine Heizungsanlage zu schaffen, um damit eine zusätzliche Einsparung von Heizenergie zu ermöglichen.

Gekennzeichnet ist das Verfahren dadurch, dass zur Ermittlung der Kennlinie für die Vorlauftemperatur zusätzlich Werte für die Winddichte des Gebäudes und/oder die Erwärmung des Gebäudes durch Sonneneinstrahlung als einstellbare Parameter einzugeben sind, und/oder dass aktuelle Messwerte für Windgeschwindigkeit und/oder Sonneneinstrahlung bei der Ermittlung der Kennlinie berücksichtigt werden.

## Beschreibung

Die Erfindung betrifft ein Verfahren zum Regeln einer Heizungsanlage nach dem Oberbegriff des Patentanspruches 1.

Gattungsgemäße Heizungsanlagen bestehen aus mindestens einem Heizkessel mit einem Heizkreislauf zu mindestens einem angeschlossenen Wärmeverbraucher sowie einem Regelgerät. Dieses ermittelt üblicherweise entsprechend einer gemessenen Außentemperatur und in Abhängigkeit von einzugebenden Sollwerten eine Kennlinie für die Vorlauftemperatur im Heizkreislauf, um den geforderten Wärmebedarf sicherzustellen.
Insbesondere in gut wärmegedämmten Gebäuden wird immer weniger Kesselleistung für die Raumheizung benötigt. Denn mit der Bauweise, zum Beispiel durch die Anordnung großer Glasflächen in Südrichtung, kann die passive Solarenergie dabei immer besser ausgenutzt werden. Dies bedeutet aber, dass die in das Gebäude eingebrachte Fremdwärme durch Sonneneinstrahlung auch den Heizbetrieb wesentlich beeinflusst. Je nach Position eines Raumtemperaturfühlers kann beispielsweise die in ein Gebäude eingebrachte Fremdwärme nicht richtig oder erst relativ spät erfasst werden. Dann wird der Heizbetrieb möglicherweise mit den normalen Einstellungen fortgeführt, obwohl die Räume schon genügend temperiert sind. Somit kann es erstens zu unnötigen Brennerlaufzeiten und zweitens zu negativen Einflüssen auf den Wirkungsgrad bzw. die Energiebilanz der gesamten Heizungsanlage kommen.
Im Gegensatz dazu gibt es im Gebäudebestand noch sehr viele Altbauten mit geringer Winddichtheit. Mit steigender Windgeschwindigkeit bzw. Anströmung erhöhen sich dabei die Energieverluste deutlich, so dass möglicherweise ein behagliches Raumklima für die Raumnutzer nicht mehr vorliegt, weil die außentemperaturabhängige Vorlauftemperatur im Heizkreislauf nicht ausreicht. Da Wind und Sonneneinstrahlung stark wechselnde Einflüsse darstellen, ist es mit den bisher bekannten Systemen nur bedingt möglich, diese äußeren Einflüsse zu erfassen. Zum Beispiel ist es bekannt, bei der Installation einer Heizungsanlage im Regelgerät Werte für die Gebäudedämmung einzugeben. Wird diese Eingabe falsch ausgewählt, tritt möglicherweise bei starkem Wind und nur außentemperaturabhängiger Regelung eine Wärme-Unterversorgung im Gebäude auf. Im Umkehrfall wird bei geringer Windanströmung oder starker Sonneneinstrahlung eventuell die Kennlinie immer zu hoch berechnet. Dann wird das Gebäude überheizt und Energie verschwendet.

Der Erfindung liegt daher die Aufgabe zugrunde, ein flexibel auf verschiedene Gebäudearten anzupassendes Regelgerät für eine Heizungsanlage zu schaffen, um damit eine zusätzliche Einsparung von Heizenergie zu ermöglichen.

Erfindungsgemäß wird dies mit den Merkmalen des Patentanspruches 1 gelöst. Vorteilhafte Weiterbildungen sind den Unteransprüchen zu entnehmen.
Das Verfahren zum Regeln einer Heizungsanlage ist dadurch gekennzeichnet, dass zur Ermittlung der Kennlinie für die Vorlauftemperatur zusätzlich Werte für die Winddichte des Gebäudes und/oder die Erwärmung des Gebäudes durch Sonneneinstrahlung als einstellbare Parameter einzugeben sind. Wahlweise oder parallel können dazu noch aktuelle Messwerte für Windgeschwindigkeit und/oder Sonneneinstrahlung bei der Ermittlung der Kennlinie berücksichtigt werden.
Die Werte für die Winddichte des Gebäudes und/oder die Erwärmung des Gebäudes durch Sonneneinstrahlung sind als Klartext-Umschreibung einzugeben. Beispielsweise sind jeweils hinter den Worten "hoch", "mittel" und "gering" als für den Anlagennutzer einstellbare Parameter die entsprechenden Rechenwerte für die Formel zur Ermittlung der Kennlinie für die Vorlauftemperatur hinterlegt.
Bei einer gering eingestellten Winddichte des Gebäudes bewirkt der mit einem Windmesser detektierte Wind eine Anhebung der Vorlauftemperatur. Demgegenüber hat bei einer hoch eingestellten Winddichte des Gebäudes der gemessene Wind keinen oder nur einen geringen Einfluss auf die Vorlauftemperatur bzw. die Kennlinie. Genauso bewirkt die tatsächlich gemessene Sonneneinstrahlung bei einer als gering eingestellten Erwärmung des Gebäudes durch Sonneneinstrahlung nur eine kleine oder keine Absenkung der Vorlauftemperatur. Bei einer hoch eingestellten Erwärmung des Gebäudes durch Sonneneinstrahlung hat somit auch die gemessene Sonneneinstrahlung einen stärkeren Einfluss auf die Absenkung der Vorlauftemperatur bzw. der Kennlinie.
Vorzugsweise werden die aktuellen Messwerte für Windgeschwindigkeit und/oder Sonneneinstrahlung in Abhängigkeit von der aktuell vorherrschenden Außentemperatur, der Uhrzeit und/oder der aktuell vorliegenden Wärmeanforderung unterschiedlich stark bei der Ermittlung der Kennlinie bzw. der Vorlauftemperatur berücksichtigt. Damit ist einerseits das Nutzerverhalten gut abgebildet und andererseits kann die Regelung vorausschauend reagieren. Beispielsweise wird die Vorlauftemperatur angehoben, wenn die Außentemperatur fällt, Wind aufkommt, eine Wärmeanforderung vorliegt und noch einige Stunden geheizt werden muss.
Neben speziell zugeordneten Messeinrichtungen für Windgeschwindigkeit und/oder Sonneneinstrahlung ist es für die Durchführung des erfindungsgemäßen Verfahrens auch denkbar, aus bereits vorliegenden Messwerten von Windkraftanlagen, thermischen Solaranlagen oder Photovoltaikanlagen die notwendigen Parameter für das Regelgerät der Heizungsanlage zu ermitteln. Auch eine Anknüpfung der Regelung an Daten von Wetterstationen oder Wetterdiensten ist möglich.
Mit der Erfindung steht ein einfaches, aber genaues Verfahren zum Regeln einer Heizungsanlage zur Verfügung, mit dem ein Regelgerät über Parameter-Einstellungen flexibel auf verschiedene Gebäudearten angepasst werden kann, um damit den Wirkungsgrad der Heizungsanlage zu optimieren. Außerdem werden unnötige Brennerstarts verhindert, der gewünschte Wärmekomfort bereitgestellt und ein Überheizen der Räume bei starker Sonneneinstrahlung vermieden. Das Aufheizverhalten der zu erwärmenden Räume sowie das Betriebsverhalten der Heizungsanlage sind noch enger am tatsächlichen, durch die Abstrahlungsverluste zur Umgebung entstehenden Wärmebedarf orientiert.

## Patentansprüche

1. Verfahren zum Regeln einer Heizungsanlage mit mindestens einem Heizkessel, einem Heizkreislauf zu mindestens einem angeschlossenen Wärmeverbraucher sowie einem Regelgerät, welches entsprechend einer gemessenen Außentemperatur und in Abhängigkeit von einzugebenden Sollwerten eine Kennlinie für die Vorlauftemperatur im Heizkreislauf ermittelt,
**dadurch gekennzeichnet, dass** zur Ermittlung der Kennlinie für die Vorlauftemperatur zusätzlich Werte für die Winddichte des Gebäudes und/oder die Erwärmung des Gebäudes durch Sonneneinstrahlung als einstellbare Parameter einzugeben sind, und/oder dass aktuelle Messwerte für Windgeschwindigkeit und/oder Sonneneinstrahlung bei der Ermittlung der Kennlinie berücksichtigt werden.

2. Verfahren nach Anspruch 1,
**dadurch gekennzeichnet, dass** die Werte für die Winddichte des Gebäudes und/oder die Erwärmung des Gebäudes durch Sonneneinstrahlung über eine Umschreibung, welche einem Rechenwert entspricht, als einstellbare Parameter einzugeben sind.

3. Verfahren nach Anspruch 1 oder 2,
**dadurch gekennzeichnet, dass** bei einer gering eingestellten Winddichte des Gebäudes gemessener Wind eine Anhebung der Vorlauftemperatur bewirkt und dass bei einer hoch eingestellten Winddichte des Gebäudes der gemessene Wind keinen oder nur einen geringen Einfluss auf die Vorlauftemperatur bzw. die Kennlinie hat.

4. Verfahren nach einem der Ansprüche 1 bis 3,
**dadurch gekennzeichnet, dass** bei einer gering eingestellten Erwärmung des Gebäudes durch Sonneneinstrahlung die gemessene Sonneneinstrahlung nur eine geringe oder keine Absenkung der Vorlauftemperatur bewirkt und dass bei einer hoch eingestellten Erwärmung des Gebäudes durch Sonneneinstrahlung die gemessene Sonneneinstrahlung einen stärkeren Einfluss auf die Absenkung der Vorlauftemperatur bzw. der Kennlinie hat.

5. Verfahren nach einem der Ansprüche 1 bis 4,
**dadurch gekennzeichnet, dass** aktuelle Messwerte für Windgeschwindigkeit und/oder Sonneneinstrahlung in Abhängigkeit von der aktuell vorherrschenden Außentemperatur, der Uhrzeit und/oder der aktuell vorliegenden Wärmeanforderung unterschiedlich stark bei der Ermittlung der Kennlinie bzw. der Vorlauftemperatur berücksichtigt werden.
